# EUROPEAN PATENT SPECIFICATION

(11) **EP 3 048 278 B1**
(45) Date of publication and mention of the grant of the patent: **07.03.2018**
(21) Application number: 15152510.2
(22) Date of filing: 26.01.2015
(51) Int. Cl.: F01N 3/021, F01N 11/00, F01N 13/00, B01D 46/00, G01M 15/10, G01N 31/10

(54) **Device for the diagnosis of the operability of a particle filter for an exhaust gas stream of an internal combustion engine**
Vorrichtung zur Diagnose der Funktionsfähigkeit eines Teilchenfilters für einen Abgasstrom einer Brennkraftmaschine
Dispositif pour le diagnostic de l'aptitude au fonctionnement d'un filtre à particules d'un flux de gaz d'échappement d'un moteur à combustion interne

(43) Date of publication of application: 27.07.2016
(73) Proprietor: Bosal Emission Control Systems NV, 3560 Lummen (BE)
(72) Inventor: CLOUDT, Robert, 6031 EE Nederweert (NL); WOLLANTS, Freddy, 3201 Aarschot (BE)
(74) Representative: Bohest AG

(56) References cited:
- EP-A1- 1 914 399
- EP-A1- 2 559 887
- WO-A1-2011/154802
- JP-A- 2003 056 332
- JP-A- 2008 064 621
- US-A1- 2013 047 841

## Description

### FIELD OF THE INVENTION

The invention relates to a device for the diagnosis of the operability of a particle filter for an exhaust gas stream of an internal combustion engine device.

### BACKGROUND

In order to comply with more and more strict legislature related to the protection of the environment, reduction of environmental pollution through automotive vehicles with internal combustion engines is crucial. Therefore, in particular the exhaust systems of vehicles with diesel engines comprise particle filters designed to drastically reduce or eliminate soot particles in the exhaust gas finally emitted from the exhaust system to the environment. To ensure that these particle filters properly work so-called "On-Board-Diagnosis" (OBD)-systems have been devised for monitoring the status of the particle filter and for generating an alarm signal in case the particle filter does not properly work, or for initiating corrective action (i.e. regeneration of the particle filter).

An example of such diagnosis system is described in US 2013/0047841 A1. The system described there includes, downstream of the particle filter, a detection filter and a sensor for measuring an output parameter of the detection filter, for example the temperature of the exhaust gas downstream of the detection filter. The detection filter is arranged in a secondary exhaust line. The secondary exhaust line is formed by a branch pipe the inlet and outlet of which are connected to the main exhaust line while the branch pipe extends outside the main exhaust line. A first portion of the exhaust gas that has passed the particle filter passes through the secondary exhaust line, while the main portion of that exhaust gas passes through the main exhaust line. The secondary exhaust line (the branch pipe) is arranged outside the perimeter and at a considerable distance from the main exhaust line, so that the first portion of the exhaust gas passing through the secondary exhaust line (branch pipe) via the wall of the branch pipe is in thermal contact with the ambient so that heat exchange occurs (i.e. the first portion of the exhaust gas flowing through the branch pipe is cooled down to a lower temperature). In case there are too many residual particles contained in the exhaust gas that has passed through the particle filter, the detection filter in the secondary exhaust line (branch pipe) is getting clogged, this clogging of the detection filter resulting in a reduced flow of exhaust gas through the portion of the branch pipe downstream of the detection filter. As a consequence of this reduced flow of exhaust gas in the branch pipe downstream of the detection filter, the reduced flow of exhaust gas is cooled down to a temperature further below the temperature to which the exhaust is cooled down when the detection filter is not clogged. The more soot particles are contained in the exhaust gas having passed the particle filter (i.e. the worse the particle filter works) the more the detection filter in the branch pipe is getting clogged, and the more the temperature of the exhaust gas in the branch pipe downstream of the detection filter goes down. Thus, the temperature of the exhaust gas in the branch pipe downstream of the detection filter is indicative of the status of the particle filter (particle filter is properly working or not).

While this principle generally works well, one of the major drawbacks of the above-discussed constructional approach (branch pipe arranged at a distance to main pipe) is that no compact construction is possible as the secondary exhaust line is arranged outside of the perimeter of the main exhaust line. Additionally, the bent portions of the branch pipe (the inlet and outlet of the branch pipe are connected to the main pipe) are difficult and expensive to manufacture thus rendering the device shown in US 2013/0047841 A1 impractical.

### SUMMARY OF THE INVENTION

It is therefore an object of the present invention to provide a new device for the diagnosis of the operability of a particle filter for an exhaust gas stream of an internal combustion engine, either diesel or gasoline, solving the above described problems. In order to overcome these problems, the present invention suggests a device as it is specified by the features of the independent claim. Embodiments of the device according to the invention are the subject matter of the dependent claims.

In the frame of this application, the term "upstream" means closer to the particle filter and/or in the direction opposite to that of the exhaust stream during operation. "Downstream" means closer to the end of the exhaust system where it vents to open air, and/or in the direction to the exhaust stream direction during operation.

The device for the diagnosis of the operability of a particle filter for an exhaust gas stream of an internal combustion engine according to the invention comprises an exhaust conduit having an outer wall, the outer wall of the exhaust conduit defining a virtual bounding tubular envelope. The virtual bounding tubular envelope is the smallest possible tubular envelope having an elliptic or a circular cross-section co-planar to the cross-section of the exhaust conduit and completely surrounding the outer wall of the exhaust conduit. The device further comprises an exhaust chamber having a detection filter and a temperature sensor arranged in the exhaust chamber, the temperature sensor being arranged for measuring the temperature of a portion of the exhaust gas stream having passed through at least a part of the detection filter. At least a portion of the exhaust chamber is thermally connected to the environment exterior to the exhaust conduit to form a thermal bridge between the exhaust chamber and the environment exterior to the exhaust conduit. The exhaust chamber additionally is at least partly arranged within the virtual bounding tubular envelope over the entire length of the exhaust chamber. The length of the exhaust chamber is the distance between the inlet and the outlet of the exhaust chamber, normal to the cross-section of the exhaust chamber. Particularly, the exhaust chamber may be entirely arranged within the virtual bounding tubular envelope. The virtual bounding tubular envelope may be bent or straight and may have constant or variable radius of its cross-section over the length of the tubular envelope.

Elliptic shall mean a shape in form of an ellipse. The ellipse is a curve on a plane surrounding two focal points such that a straight line drawn from one of the focal points to any point on the curve and then back to the other focal point has the same length for every point on the curve.

According to one aspect of the invention, the virtual bounding tubular envelope is a virtual bounding cylinder, the virtual bounding cylinder being the smallest possible cylinder having an elliptic or a circular cross-section and a cylinder axis normal to the cross-section of the exhaust conduit and completely surrounding the outer wall of the exhaust conduit. Particularly, the exhaust chamber may be entirely arranged within the virtual bounding cylinder. The virtual bounding cylinder has a straight geometry over its length and has constant radius of its cross-section.

The virtual bounding tubular envelope or the virtual bounding cylinder having an elliptic cross-section is particularly designed in such a way, that it will substantially follow the geometry of the outer wall of the exhaust conduit around at least the majority (more than 50%, particularly 70% or more, more particularly 85% or more) of its circumference.

According to another aspect of the invention, the device may further comprise an evaluation unit for comparing the temperature of a portion of the exhaust gas stream having passed through at least a part of the detection filter measured by the temperature sensor arranged in the exhaust chamber with a reference temperature. The reference temperature signal may be available in a database or as a mathematical simulation generating the reference temperature which may be present or computed in the evaluation unit. Alternatively, the reference temperature is derived from a temperature of the exhaust gas stream measured by a further temperature sensor arranged outside of the exhaust chamber, either in the exhaust conduit or upstream or downstream of the exhaust chamber. If necessary, the signal of the temperature sensor arranged outside of the exhaust chamber and in contact with the exhaust gas stream is further computed in the evaluation unit to a reference temperature according to a predefined procedure (e.g. mathematical function).

In a further aspect of the invention, the exhaust chamber has a longitudinal axis which follows the longitudinal axis form of the exhaust conduit over the entire length of the exhaust chamber. Particularly, the exhaust chamber has a straight longitudinal axis over its entire length.

According to another aspect of the invention, the exhaust chamber is at least partly arranged in the interior of the exhaust conduit over the entire length of the exhaust chamber.

According to a further aspect of the invention, the entire exhaust chamber is arranged in the interior of the exhaust conduit.

According to still a further aspect of the invention, the portion of the exhaust chamber thermally connected to the environment exterior to the exhaust conduit is thermally coupled to the outer wall of the exhaust conduit.

According to yet a further aspect of the invention, the device comprises a further temperature sensor arranged in the exhaust conduit outside of the exhaust chamber for measuring the temperature of a portion of the exhaust gas stream outside the exhaust chamber.

Still in accordance with a further aspect of the invention, the device further comprises a heat sink body and the portion of the exhaust chamber thermally connected to the environment exterior to the exhaust conduit is thermally coupled to the heat sink body. The heat sink body is also thermally connected to the environment exterior to the exhaust conduit.

In accordance with another aspect of the invention, the heat sink body extends into the exhaust chamber.

Yet in accordance with another aspect of the invention, the heat sink body comprises exterior fins extending outwardly from the heat sink body.

In accordance with a further aspect of the invention, the exhaust chamber is thermally separated from the main exhaust conduit to form a thermal break between the exhaust chamber and the exhaust conduit.

In accordance with a still further aspect of the invention, the device is embodied such that the detection filter of the exhaust chamber is replaceable.

In accordance with another aspect of the invention, the detection filter has a cross sectional area such that the portion of the exhaust gas stream passing through the detection filter amounts to 0.01% to 10% of the mass flow of the exhaust gas stream, particularly 0.1 % to 6% of the mass flow of the exhaust gas stream.

According to yet a further aspect of the invention, the exhaust chamber comprises an elongated exhaust chamber conduit having an inlet and an outlet.

Still in accordance with a further aspect of the invention, the outlet of the exhaust chamber conduit is connected to the exhaust conduit.

Yet in accordance with another aspect of the invention, the detection filter of the exhaust chamber is cylindrical and surrounds the temperature sensor, and the cylindrical detection filter is arranged such that a longitudinal cylinder axis of the cylindrical detection filter is normal to the longitudinal axis of the exhaust conduit.

According to an additional embodiment the invention, the detection filter comprises a catalytic coating that promotes particulate matter oxidation. Particularly, the catalytically active coating component may contain platinum, palladium, rhodium, base metals or a mixture thereof, in any catalytically active oxidation state.

In accordance with a further aspect of the present invention, an on-board diagnosis system for the diagnosis of the operability of a particle filter for an exhaust gas stream of an internal combustion engine is suggested. The on-board diagnosis system comprises a device according to anyone of the preceding claims, and an evaluation unit configured to compare the temperature measured by the temperature sensor arranged in the exhaust chamber of the device with a reference temperature.

According to an additional aspect of the present invention, the on-board diagnosis system further comprises a reference temperature sensor arranged in contact with the exhaust gas stream outside of the device for measuring the temperature of the exhaust gas stream. This reference temperature sensor may be arranged upstream or downstream of the device according to the invention in the exhaust pipe to or from the device.

In an alternative embodiment of the present invention, the device for the diagnosis of the operability of a particle filter for an exhaust gas stream of an internal combustion engine comprises an exhaust conduit having an outer wall, and an exhaust chamber having a detection filter. A temperature sensor is arranged in the exhaust chamber, the temperature sensor being arranged for measuring the temperature of a portion of the exhaust gas stream having passed through at least a part of the detection filter. At least a portion of the exhaust chamber is thermally connected to the environment exterior to the exhaust conduit. The exhaust chamber is at least partly arranged in the interior of the exhaust conduit over the entire length of the exhaust chamber. Particularly, the entire exhaust chamber is arranged in the interior of the exhaust conduit.

Any previous embodiment may also equally apply to this latter alternative embodiment without specifically reciting them again.

The afore-mentioned aspects of the device according to the invention have a number of advantages. One advantage is the ease to manufacture of the device. The device is easier to integrate into an exhaust line as no additional outside space is required. This also has the advantage of being capable to be readily integrated into an existing exhaust line without modification of the car body space around the device. Additionally, the device according to the invention is less sensitive for ambient conditions like drive wind and less prone to tampering as the outside of the device has the shape related to a normal exhaust line. Another advantage of the device according to the invention is the cheaper manufacture and even low cost and simple construction of the device when compared to existing devices. A further advantage is the spontaneous regeneration of the detection filter which may be performed independently from the regeneration of the main particle filter. Another advantage are shorter intervals between checks of the detection filter and hence more frequent checks on the leakage rate of the main particle filter and increasing the monitoring frequency.

After sales serviceability is also increased with the device according to the invention and presents easy accessibility for maintenance.

### BRIEF DESCRIPTION OF THE DRAWINGS

Further advantageous aspects of the invention become apparent from the following description of embodiments of the invention with the aid of the drawings in which:
- Fig. 1: shows a 3 dimensional view of an embodiment of the invention,
- Fig. 2: is a schematic representation of the cross-section of the embodiment shown in Fig. 1, and
- Fig. 3: is a schematic representation of the section along the plane A - A of the embodiment shown in Fig. 2,
- Fig. 4: shows a further embodiment similar to the embodiment according to Fig. 1 but with a bent device according to the present invention.
- Fig. 5: shows an exterior view of a further embodiment of the invention,
- Fig. 6: is a schematic representation of the cross-section of the embodiment shown in Fig. 5, and
- Fig. 7: is a schematic representation of the section along the plane B - B of the embodiment shown in Fig. 6,
- Fig. 8: shows a further embodiment similar to the embodiment according to Fig. 5 but with a partially bent device according to the present invention.
- Fig. 9: shows a 3 dimensional view of a further embodiment of the invention,
- Fig. 10: is a schematic representation of the cross-section of the embodiment shown in Fig. 9, and
- Fig. 11: is a schematic representation of the section along the plane C - C of the embodiment shown in Fig. 10.
- Fig. 12: shows a 3 dimensional view of a further embodiment of the invention,
- Fig. 13: is a schematic representation of the cross-section of the embodiment shown in Fig. 12, and
- Fig. 14: is a schematic representation of the section along the plane D - D of the embodiment shown in Fig. 13.

### DETAILED DESCRIPTION OF EMBODIMENTS

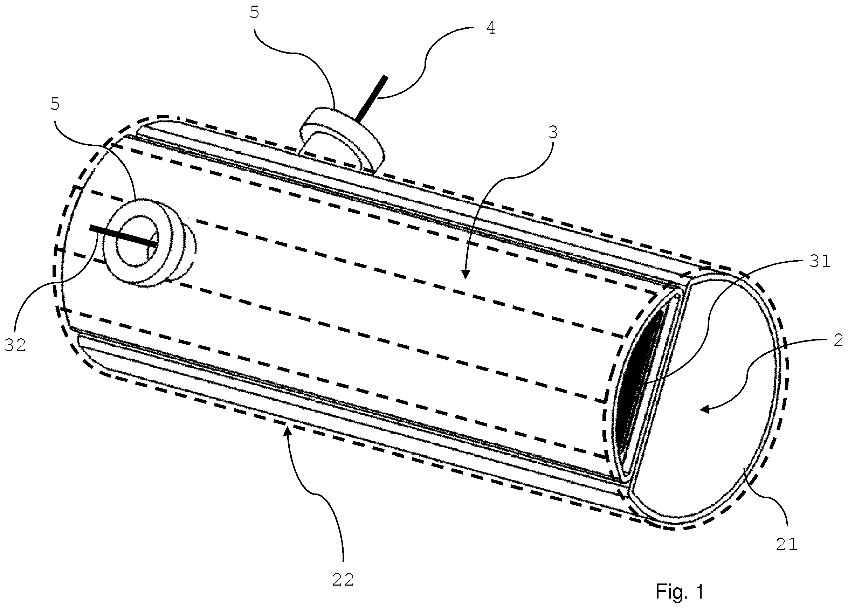

### Fig. 1 - 4 depict a first embodiment according to the present invention.

In Fig. 1, an exterior view of an embodiment of the device for the diagnosis of the operability of a particle filter for an exhaust gas stream 1 of an internal combustion engine is represented with an exhaust conduit 2 having an outer wall 21. The exhaust conduit 2 is flattened on one side. The outer wall 21 of the exhaust conduit 2 defines a virtual bounding cylinder 22, which is a particular case of the virtual bounding tubular envelope, the virtual bounding cylinder 22 being the smallest possible cylinder having a circular cross-section and a cylinder axis normal to the cross-section of the exhaust conduit 2 and completely surrounding the outer wall 21 of the exhaust conduit 2. In the particular embodiment shown in Fig. 1, the exhaust conduit 2 has a circular cross-section flattened on one side, but may have any geometry suitable for an exhaust conduit. The device further comprises an exhaust chamber 3 which fills at least part of the volume engendered by the virtual bounding cylinder 22 outside of the exhaust conduit 2 flattened on one side. The longitudinal axis of the exhaust chamber 3 particularly follows the longitudinal axis form of the exhaust conduit 2 over the entire length of the exhaust chamber and particularly, the exhaust chamber has a straight longitudinal axis.

The exhaust chamber 3 comprises a detection filter 31 particularly having filtering properties similar to those of the particle filter used upstream of the device. The detection filter 31 may be designed so to permit a very low pressure drop when the filter is not clogged by particles. The detection filter 31 particularly is made of a porous ceramic flow-through substrate, porous sintered metal foam, wire mesh, metal fleece sintered or (unsintered), ceramic or metal foam. The detection filter may also be made by additive manufacturing, also commonly known as 3D-printing. The detection filter 31 may further comprise several layers of non-homogeneous or anisotropic filtration material. Particularly, the detection filter 31 comprises a catalytic coating that promotes particulate matter oxidation. The catalytically active coating component may contain platinum, palladium, rhodium, base metals or a mixture thereof, in any catalytically active oxidation state.

At least a portion of an exhaust chamber 3 is thermally connected to the environment exterior to the exhaust conduit 2 to form a thermal bridge between the exhaust chamber 3 and the environment exterior to the exhaust conduit 2. The exhaust chamber 3 is arranged within the virtual bounding cylinder 22 over the entire length of the exhaust chamber 3. The geometry of the exhaust conduit 2 is chosen so that the exhaust chamber 3 can be integrated at least partially over the entire length of the exhaust chamber 3 within the virtual bounding cylinder 22, particularly entirely within the virtual bounding cylinder 22 over the entire length of the exhaust chamber 3.

A heat sink body 5 is in thermal contact with the exhaust chamber 3. A temperature sensor 32 is arranged in the exhaust chamber 3 and measures the temperature of a portion 11 of the exhaust gas stream 1 having passed through the detection filter 31. A further reference temperature sensor 4 is arranged in the exhaust conduit 2 outside of the exhaust chamber 3 and measures the temperature of the exhaust gas stream 12 outside the exhaust chamber 3 as basis for the reference temperature. The reference temperature sensor 4 may alternatively be situated in the exhaust line (not shown in the figure) upstream or downstream of the exhaust chamber 3. In a further alternative embodiment, no further reference temperature sensor is used for the function of the device.

Particularly, the exhaust chamber 3 may be thermally separated from the main exhaust conduit 2 to form a thermal break between the exhaust chamber 3 and the exhaust conduit 2. To this end, for example an air gap or an isolating material may be used for thermally isolating the exhaust channel 3 from the exhaust conduit 2.

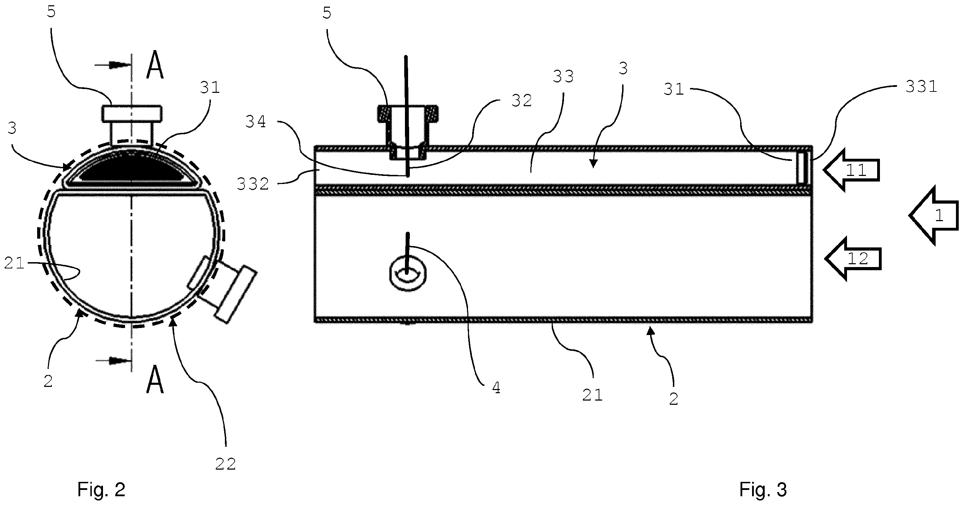

Fig. 2 and 3 are detailed representations of the sections of the device shown in Fig. 1. Fig. 2 shows a cross-sectional view of the specific embodiment according to the invention shown in Fig. 1. The virtual bounding cylinder 22 is defined by the outer wall 21 of the exhaust conduit 2 flattened on one side. The virtual bounding cylinder 22 depicted in Fig. 2 is the smallest possible cylinder having a circular cross-section and a cylinder axis normal to the cross-section of the exhaust conduit 2 and completely surrounding the outer wall 21 of the exhaust conduit 2 flattened on one side. The exhaust chamber 3 has a detection filter 31 fitting the cross-section of the exhaust chamber 3 which is arranged normal to the longitudinal axis of the exhaust conduit 2 and is situated at the inlet 331 of the exhaust chamber 3. The detection filter 31 alternatively may be situated at any position within the exhaust chamber 3, preferably upstream to the temperature sensor 32.

Fig. 3 represents a sectional view of the specific embodiment according to the invention shown in Fig. 1 and Fig. 2 across the plane A - A in direction of the arrows in Fig. 2. The exhaust chamber 3 comprises a conduit 33 having an inlet 331 and an outlet 332 and the detection filter 31 is arranged in the cross section of the inlet 331 of the conduit 33 of the exhaust chamber 3. Alternatively, the filter may be arranged at any position in the exhaust conduit 33, particularly upstream from the temperature sensor 32. The detection filter 31 is particularly arranged so as to be replaceable. In particular, the conduit 33 of the exhaust chamber 3 is integrated at least partially over the entire length of the exhaust chamber 3 within the virtual bounding cylinder 22, particularly entirely within the virtual bounding cylinder 22 over the entire length of the exhaust chamber 3.

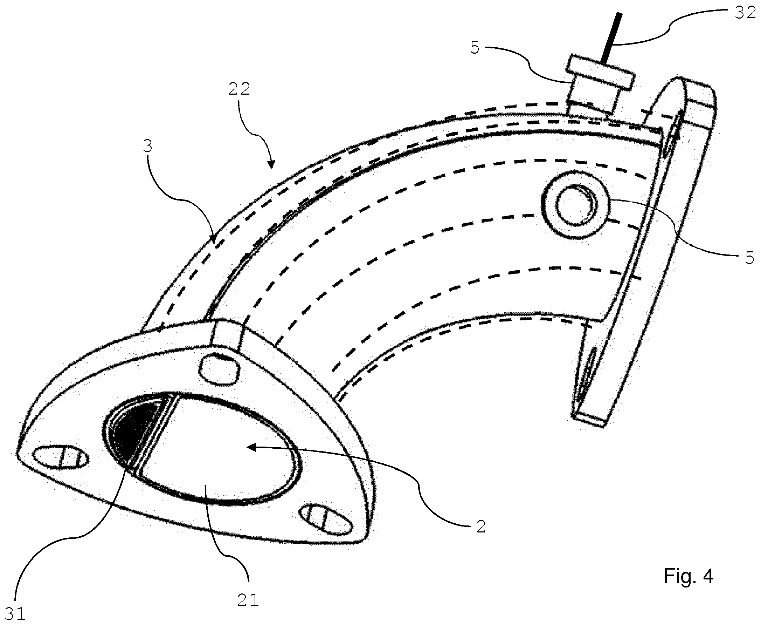

Fig. 4 depicts a specific embodiment of the present invention similar to the embodiment in Fig. 1 to Fig. 3 except that the exhaust conduit 2 and the exhaust chamber 3 are bent. The exhaust conduit 2 also has a circular cross-section flattened on one side. The exhaust conduit may however have any geometry suitable for an exhaust conduit. The outer wall 21 of the exhaust conduit 2 however defines a virtual bounding tubular envelope 22 which is bent, the virtual bounding tubular envelope 22 being the smallest possible tubular envelope having a circular cross-section co-planar to the cross-section of the exhaust conduit 2 and completely surrounding the outer wall 21 of the exhaust conduit 2 at any position along the exhaust conduit 2. In this particular embodiment in Fig. 4, the longitudinal axis of the exhaust chamber 3 is also bent and particularly follows the longitudinal bent axis form of the exhaust conduit 2 over the entire length of the exhaust chamber. Alternatively, only part of the exhaust conduit 2 may be bent, comprising, for example, straight portions, particularly before and after a bent central part.

The geometry (shape, section, etc.) of the exhaust chamber 3 is such that only 0.01% to 10% of the of the exhaust gas stream 1 mass flow, particularly 0.1% to 6%, flows though the detection filter 31.

Optionally, further restrictions or Venturi arrangements may be arranged within the exhaust conduit 2 to promote the flow of the exhaust gas though the detection filter 31.

The flow direction of the exhaust gas stream 1 as well as of the portion 11 of the exhaust gas stream 1 having passed through at least a part of the detection filter 31 and a portion 12 of the exhaust of the exhaust gas stream 1 outside the exhaust chamber 3 are illustrated by the arrows 1, 11, 12.

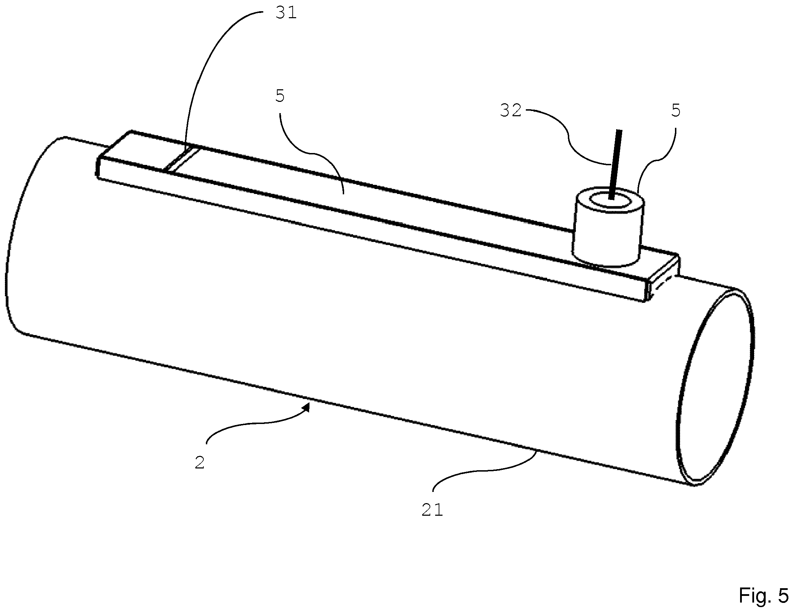

### Fig. 5 - 8 depict a second embodiment according to the present invention.

Fig. 5 represents a further specific embodiment of the present invention. The entire exhaust chamber 3 is arranged in the interior of the exhaust conduit 2 having a cylindrical shape with a circular cross-section. In the particular embodiment shown in Fig. 5, the exhaust conduit 2 has a circular cross-section, but may have any geometry suitable for an exhaust conduit. Alternatively, the exhaust chamber 3 is only partly arranged in the interior of the exhaust conduit 2 over the entire length of the exhaust chamber 3 and a portion of the exhaust chamber 3 may surpass the outside wall 21 of the exhaust conduit 2.

A heat sink body 5 is contacting the exhaust chamber 3 for increased thermal energy exchange with the environment exterior to the exhaust conduit 2.

A detection filter 31 is inserted through a slit into the exhaust chamber 3 and is accessible from the exterior of the exhaust chamber 3 for easy maintenance and replacement.

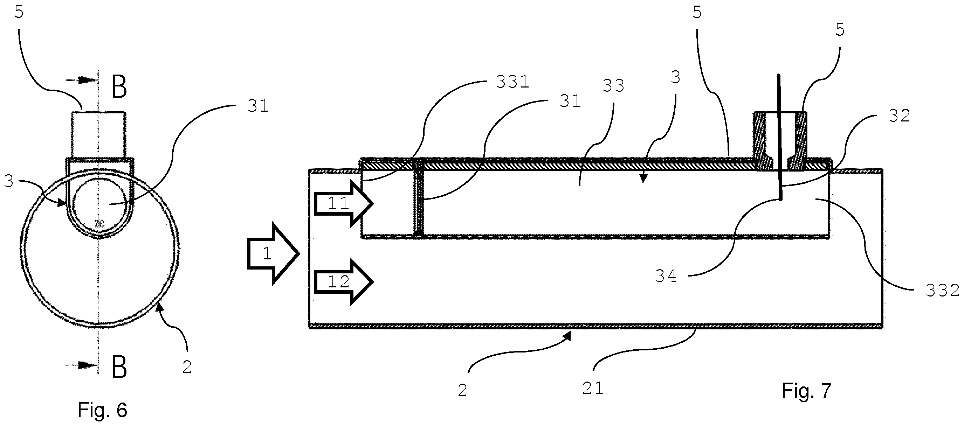

Fig. 6 represents a cross sectional view of the specific embodiment according to the present invention as shown in Fig. 5. The exhaust chamber 3 is inserted into the exhaust conduit 2 though an opening in the exhaust conduit 2 outer wall 21 and hermetically fixed with the outer wall 21 at the circumference of the opening in the exhaust conduit 2 outer wall 21. Particularly, the fixation of the exhaust chamber 3 with the outer wall 21 at the circumference of the opening in the exhaust conduit 2 is performed by welding.

Fig. 7 depicts a sectional view of the specific embodiment according to the invention shown in Fig. 5 and Fig. 6 along the plane B - B in direction of the arrows of Fig. 6. Fig. 7 shows the exhaust chamber 3 comprising a conduit 33 having an inlet 331 and an outlet 332 and the detection filter 31 is arranged in the cross section of the conduit 33 of the exhaust chamber 3. Similarly to the embodiment shown in Fig. 1 - 4, the filter may be arranged at any position in the exhaust chamber 3, particularly upstream from the temperature sensor 32. In particular, the conduit 33 of the exhaust chamber 3 is integrated at least partially over the entire length of the exhaust chamber 3 within the exhaust conduit 2, particularly entirely within the exhaust conduit 2 over the entire length of the exhaust chamber 3. The directions of the exhaust gas stream flows are indicated by the arrows 1, 11, 12.

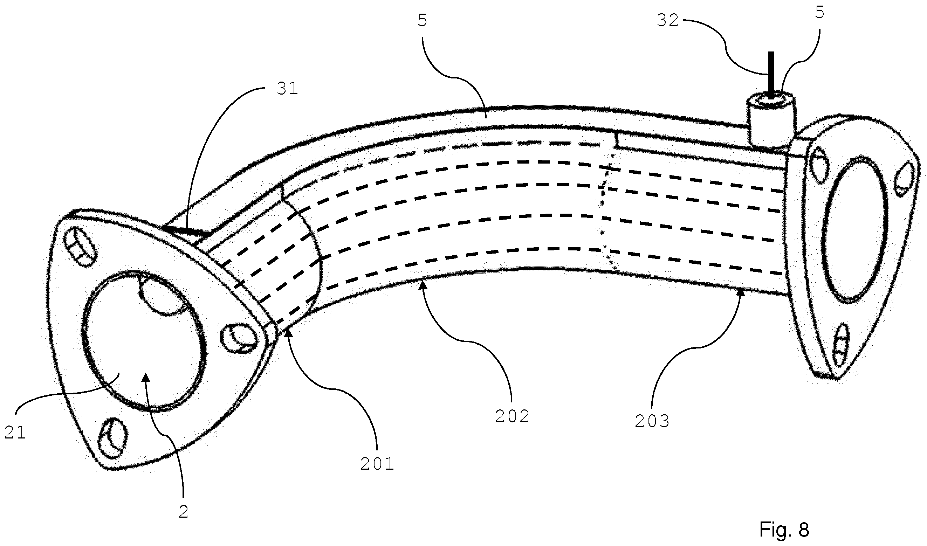

Fig. 8 illustrates another specific embodiment of the present invention similar to the embodiment in Fig. 5 to Fig. 7 except that the exhaust conduit 2 and the exhaust chamber 3 are bent over part of its length. Alternatively, the exhaust conduit and the exhaust chamber are bent over their complete length. Again, in the particular embodiment shown in Fig. 8, the exhaust conduit 2 has a circular cross-section, but may have any geometry suitable for an exhaust conduit. The entire exhaust chamber 3 is arranged in the interior of the exhaust conduit 2 having a tubular shape which is bent over part of its length and which has a circular cross-section. The exhaust conduit 2 and the exhaust chamber 3 have a first straight portion 201, the detection filter 31 being arranged in the exhaust chamber within this first straight portion 201.

The straight portion 201 is then followed subsequently by a bent central portion 202 and finally followed again subsequently by a straight portion 203. In this particular embodiment in Fig. 8, a portion of the longitudinal axis of the exhaust chamber 3 is bent and particularly follows the longitudinal axis form of the exhaust conduit 2 over at least part of the length of the exhaust chamber.

Similarly to the previous embodiment, further restrictions or Venturi arrangements may be arranged within the exhaust conduit 2 to promote the flow of the exhaust gas though the detection filter 31.

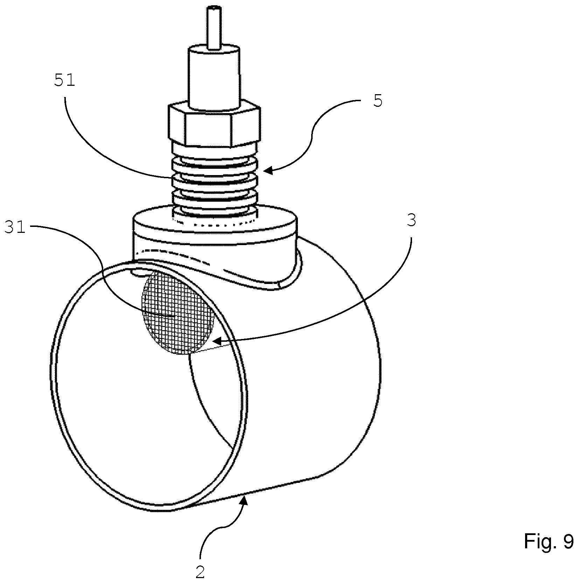

### Fig. 9 - 11 depict a third embodiment according to the present invention.

Fig. 9 shows an additional specific embodiment of the present invention. In this embodiment, the entire exhaust chamber 3 is arranged in the interior of the exhaust conduit 2 having a cylindrical shape with a circular cross-section. The exhaust conduit 2 may however have any geometry suitable for an exhaust conduit. A detection filter 31 is located at the inlet 331 of the exhaust chamber 3. The heat sink body 5 comprises exterior fins 51 for better thermal energy exchange with the environment exterior to the exhaust conduit 2.

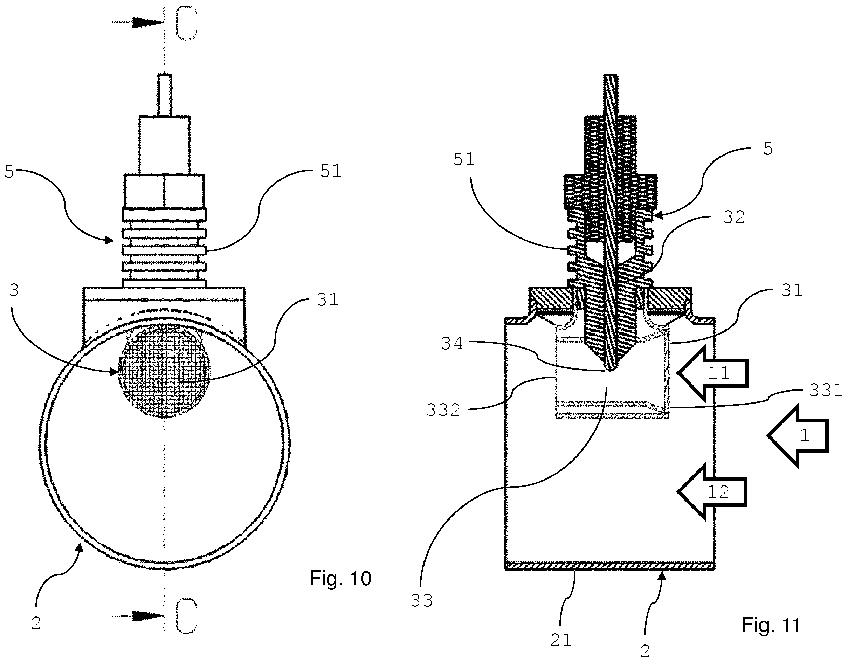

Fig. 10 depicts a cross-sectional view of the specific embodiment of the device shown in Fig. 9 and Fig. 11 a sectional view along the plane C - C in direction of the arrows of Fig. 10. In this embodiment, the exhaust chamber 3 has a circular inlet 331 and the detection filter 31 fits the cross-section of the inlet 331. The exhaust chamber 3 is thermally connected to the environment exterior to the exhaust conduit 2 by a heat sink body 5 extending into the chamber 3. The temperature sensor 32 is integrated into the heat sink body 5 and fixedly sealed with the heat sink body 5 when tightened into the exhaust chamber 3 and the tip 34 of the temperature sensor 32 further extends into the exhaust chamber 3.

The exhaust chamber 3 configured in this manner is arranged in the exhaust conduit 2 downstream of a particle filter and the directions of the exhaust gas stream flows are indicated by the arrows 1, 11, 12

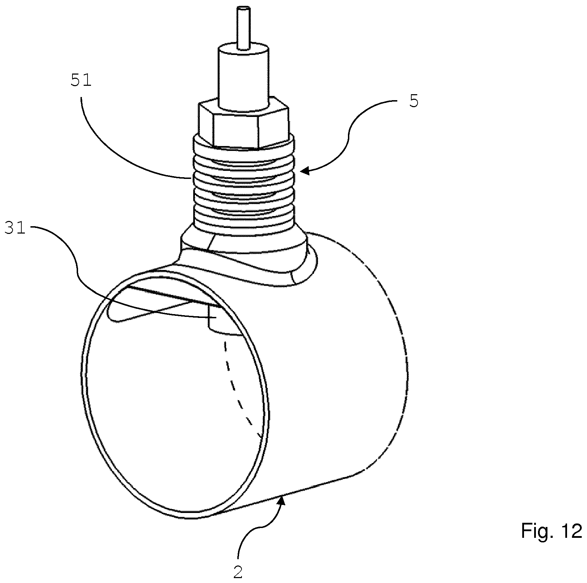

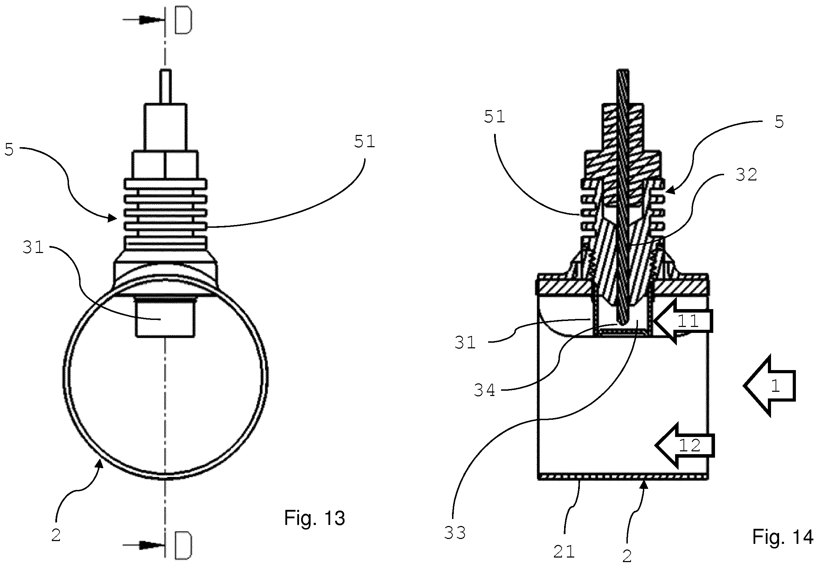

Fig. 12 - 14 depict a fourth embodiment according to the present invention. Fig. 13 is a cross-sectional view of the device shown in Fig. 12 and Fig. 14 a sectional view along the plane D - D in direction of the arrows of Fig. 13.

Similarly to the third embodiment described in Fig. 9 - 11, Fig. 12 - 14 represent a specific embodiment of the device according to the present invention comprising an exhaust chamber 3 inserted into an exhaust conduit 2 with a circular cross-section, wherein the exhaust chamber 3 is in contact with the environment exterior to the exhaust conduit 2 via a heat sink body 5 comprising fins 51 for better heat energy transfer. The exhaust conduit 2 may however have any geometry suitable for an exhaust conduit.

The detection filter 31 however, has a cylindrical shape and surrounds the temperature sensor 32 and the cylindrical detection filter 31 of the exhaust chamber 3 has a longitudinal axis normal to the longitudinal axis of the exhaust conduit 2. On the one side of the cylindrical detection filter 31, the exhaust chamber 3 is sealed by the outer wall 21 or by the tightened heat sink body 5 and on the other side by a plate.

Again, the exhaust gas stream flows are indicated by the arrows 1, 11, 12. The portion 11 of the exhaust gas stream 1 passing though the detection filter 31 is forced though the cylindrical detection filter 31 by dynamic pressure.

During operation, a portion 11 of the exhaust gas stream 1 passed through a particle filter upstream of the device according to the invention is guided through the detection filter 31 in or at the inlet 331 of the exhaust chamber 3 and the second portion 12 of the exhaust gas stream 1 passes through the exhaust conduit 2 of the device. The inlet 331 of the exhaust chamber 3 preferably has a cross-section normal to the gas flow, and uses dynamic pressure of the exhaust gas stream 1 so that a portion 11 of the exhaust gas stream 1 passes through the detection filter 31 due to the differential pressure engendered. The outlet 332 of the exhaust chamber 3 is downstream of the inlet 331 of the exhaust chamber 3.

While the portion 11 of exhaust gas stream 1 passes though the exhaust chamber 3, a temperature exchange occurs with the environment exterior to the exhaust conduit 2 over the thermal bridge, particularly over an optional heat sink body 5. The heat sink body 5 may exchange thermal energy either with the ambient environment exterior to the exhaust conduit 2 or through storing the thermal energy due to a high heat capacity, or both processes. A heat sink structure may be composed of wire mesh, metallic components and/or of outside fins for ambient heat exchange.

The detection filter 31 of the exhaust chamber 3 collects particles not retained by the particle filter. The deposition of the particles onto the detection filter 31 causes continuous clogging the filtration element of the detection filter 31 and hence reduces its permeability over time during operation. Hence, while clogging of the detection filter 31 increases, the mass flow of the portion 11 of exhaust gas stream 1 passing through the detection filter 31 and subsequently through the exhaust chamber 3 decreases. With decreasing flow though the exhaust chamber 3, the temperature drop due to the thermal exchange with the environment exterior to the exhaust conduit 2 increases gradually.

Therefore, the temperature measured by the temperature sensor 32 will give exact information on the state of the detection filter 31 by comparing the temperature of the temperature sensor 32 to a reference temperature, and hence a diagnosis of the operability of the upstream particle filter is performed by an appropriate evaluation unit. This evaluation unit may further be configured so as to classify the particle leakage type of the upstream particle filter. Examples are a "non-damaged" main particle filter, a "partially damaged" main particle filter and a "totally damaged" particle filter.

The reference temperature may be computed with a mathematical simulation taking into account various parameters and expressing the expected temperature and/or the reference temperature for a fully operational particle filter. Alternatively, the reference temperature computed by the mathematical simulation may be the temperature obtained for a damaged particulate filter , particularly leaking particulate matter at a level that does not need to be detected by legislative rules. In the latter case, any failure or damage of the particle filter is evaluated by the evaluation unit by detecting a higher particle leakage and premature clogging of the detection filter than the provided temperature reference would allow (higher than the expected particle leakage), will give raise to a warning signal.

On regular basis, or any time the evaluation unit determines the necessity, the detection filter 31 may be regenerated. Particularly, the device is dimensioned such that the particle bearing detection filter 31 may be regenerated through oxidation of the collected particles, such that the detection filter 31 approaches its original clean filter permeability again. The regeneration of the detection filter 31 may be performed either by an active regeneration process or by a spontaneous regeneration.

For an active regeneration process of the detection filter, the temperature of the exhaust gasses is raised to levels atypical for normal engine operation (typically in excess of 550°C). Such an active regeneration is normally triggered for oxidizing the particles collected in the upstream particle filter. In such a situation the detection filter 31 is regenerated at the same time the main particle filter is regenerated. These conditions are well controlled a do not occur spontaneously during normal engine operation.

Alternatively, the detection filter 31 regeneration mechanism occurs through spontaneous regeneration and may be operated under normal engine operating conditions. The spontaneous regeneration is done independently from the regeneration of the main particle filter and may therefore be advantageous and particularly suited to be used for gasoline engines besides diesel engines.

For both regeneration mechanisms it is required that the particle burn off rate under regeneration conditions is higher than the particle deposition rate.

Shorter intervals between checks on the leakage rate of the particle filter are facilitated by the spontaneous regeneration provided by a coated detection filter. These checks rely on a study of the rate of detection filter clogging from a clean detection filter state. For an uncoated detection filter, for which no spontaneous regeneration is possible, the clean detection filter state pre-condition is linked to the successful completion of an active regeneration which at best is performed every few hundred kilometer. Spontaneous detection filter regeneration can occur more often, potentially providing more opportunity for studying the clogging rate of the detection filter from a clean state more frequently and hence increasing drastically the monitoring frequency.

The particle deposition rate on the detection filter 31 may need to be limited to ensure that the equilibrium of particle deposition and burn rates are affected in favor of the burn off rate. The particle deposition rate can be limited by choosing a detection filter 31 with low particle filtration efficiency and through limiting the exhaust gas mass flux through the exhaust chamber 3 and thus through the detection filter 31. This process may be accomplished through choosing a detection filter 31 with low permeability or through limiting the area of the exhaust chamber 3 that is exposed perpendicular to the main exhaust gas flow direction, or through design of the exhaust chamber 3 to impose flow restriction. This latter case can be obtained through increasing the length of the exhaust chamber 3, introducing additional bends, reducing the diameter or flow area of the exhaust chamber 3 or through introduction of flow restriction elements like orifices or porous structures anywhere in the exhaust chamber 3.

A different way of influencing the regeneration balance is through application of a catalytic coating on the detection filter 31 that promotes particulate matter oxidation. The coating leads to higher detection filter 31 regeneration rates at a given temperature. A catalytic coating is essential in case spontaneous regeneration of the detection filter 31 is intended.

The reference temperature may be generated via a simulation model running on the evaluation unit. The simulation model at least takes into account an exhaust mass flow estimate and exhaust gas temperature signal as input and may further incorporate parameters like, for example, ambient temperature, exhaust gas backpressure, and vehicle speed.

Alternatively, the reference temperature is computed from a further reference temperature sensor 4 arranged in the exhaust conduit 2 outside of the exhaust chamber 3 and measuring the temperature of the exhaust gas stream 12 outside the exhaust chamber 3. The reference temperature sensor 4 may alternatively be situated in the exhaust line (not shown in the figure) upstream or downstream of the exhaust chamber 3.

As the simulation model may need to provide the reference temperature for a borderline particle filter, the model has to incorporate the effect of the particle emissions history on the detection filter's 31 permeability since the last detection filter 31 regeneration. It therefore needs to incorporate a simulation tracking the amount of particles deposited on the detection filter 31. To this end, the reference simulation may rely on various parameters as, for example, engine speed, engine load, air mass flow, fuel flow, air to fuel ratio, engine temperature, exhaust flow, particle filter load, particle filter filtration efficiency, PM emission, ambient temperature, barometric pressure, Exhaust Gas recirculation rate, exhaust gas temperature, vehicle speed, NO₂ concentration, O₂ concentration, etc.

A borderline particle filter refers to a damaged particulate filter leaking particulate matter at the highest possible level for which the leaking behavior can still reliably be distinguished by the inventive method from the leaking behavior of a particulate filter that is damaged to such an extent that the particulate matter emission just at or above the legislative limits. The borderline particulate filter would still exhibit particulate matter leakage below the legislative limits.

The evaluation unit takes into account the response of the temperature sensor 32. When the temperature of the sensor in the exhaust chamber 3 deviates from the expected reference, the evaluation unit will classify the deviation and give a warning signal when necessary. The temperature signals or difference between temperature signals is averaged over a period of time during which certain specific parameter conditions are met. The considered parameters may include exhaust chamber temperature sensor 32 signal, exhaust chamber gas passage temperature sensor 32 signal change rate, exhaust gas temperature at the outlet of the particle filter, exhaust gas temperature change rate at the outlet of the particle filter, ambient temperature, barometric pressure, vehicle speed, exhaust flow, time and distance since last successful detection filter 31 regeneration, etc. The decision on whether the particle leakage of the particle filter is above or below a threshold may be based on several averaging periods as described above.

The evaluation unit further may conduct simple classifications regarding failures of the detection filter 31 as, for example, the detection of a punctured or permanently clogged detection filter 31. A punctured detection filter 31 can be identified when the temperature of the sensor in the exhaust chamber 3 is very close to the particle filter outlet exhaust gas temperature, hence the temperature is higher than the simulated reference. A permanently clogged detection filter 31 may be identified by a temperature of the sensor in the exhaust chamber 3 being significantly lower than the simulated reference temperature after detection filter 31 regeneration.

The upstream particle filter that is to be monitored may be a classical particle filter (i.e. Diesel Particle Filter), but can also be any other device that has the function of filtering particles, possibly integrated with other functionalities like Selective Catalytic NOx reduction (SCR and Filter), three way catalyst (Gasoline Particle Filter) or oxidation catalyst.

While the invention has been described with the aid of embodiments, it is evident for the person skilled in the art that various changes and alterations can be made without departing from the technical teaching underlying the invention. Therefore, the invention is not intended to be limited to the described embodiments, but rather the scope of protection is defined by the appended claims.

## Claims

1. Device for the diagnosis of the operability of a particle filter for an exhaust gas stream (1) of an internal combustion engine, the device comprising:
- an exhaust conduit (2) having an outer wall (21), the outer wall (21) of the exhaust conduit (2) defining a virtual bounding tubular envelope (22), the virtual bounding tubular envelope (22) being the smallest possible tubular envelope having a circular cross-section co-planar to the cross-section of the exhaust conduit (2) and completely surrounding the outer wall (21) of the exhaust conduit (2) at any position along the exhaust conduit (2),
- an exhaust chamber (3) having a detection filter (31),
- a temperature sensor (32) arranged in the exhaust chamber (3), the temperature sensor (32) being arranged for measuring the temperature of a portion (11) of the exhaust gas stream (1) having passed through at least a part of the detection filter (31),
wherein at least a portion of the exhaust chamber (3) is thermally connected to the environment exterior to the exhaust conduit (2), and
wherein the exhaust chamber (3) is at least partly arranged within the virtual bounding tubular envelope (22) over the entire length of the exhaust chamber (3).

2. Device according to claim 1, wherein the virtual bounding tubular envelope (22) is a virtual bounding cylinder (22), the virtual bounding cylinder (22) being the smallest possible cylinder having a circular cross-section and a cylinder axis normal to the cross-section of the exhaust conduit (2) and completely surrounding the outer wall (21) of the exhaust conduit (2)

3. Device according to anyone of claim 1 or 2, wherein the exhaust chamber (3) is at least partly arranged in the interior of the exhaust conduit (2) over the entire length of the exhaust chamber (3).

4. Device according to claim 3, wherein the entire exhaust chamber (3) is arranged in the interior of the exhaust conduit (2).

5. Device according to anyone of claims 3 or 4, wherein the portion of the exhaust chamber (3) thermally connected to the environment exterior to the exhaust conduit (2) is thermally coupled to the outer wall (21) of the exhaust conduit (2).

6. Device according to anyone of claims 1 or 2, wherein the exhaust chamber (3) is thermally separated from the exhaust conduit (2).

7. Device according to anyone of the preceding claims, comprising a further reference temperature sensor (4) arranged in the exhaust conduit (2) outside the exhaust chamber (3) for measuring the temperature of a portion (12) of the exhaust gas stream (1) outside the exhaust chamber (3).

8. Device according to anyone of the preceding claims, further comprising a heat sink body (5), wherein the portion of the exhaust chamber (3) thermally connected to the environment exterior to the exhaust conduit (2) is thermally coupled to the heat sink body (5).

9. Device according to claim 8, wherein the heat sink body (5) extends into the exhaust chamber (3).

10. Device according to anyone of claims 8 or 9, wherein the heat sink body (5) comprises exterior fins (51) extending outwardly from the heat sink body (5).

11. Device according to anyone of the preceding claims, wherein the device is embodied such that the detection filter (31) of the exhaust chamber (3) is replaceable.

12. Device according to any one of the preceding claims, wherein the detection filter (31) has a cross-sectional area such that the portion (11) of the exhaust gas stream (1) passing through the detection filter (31) amounts to 0.01% to 10% of the mass flow of the exhaust gas stream (1), particularly 0.1 % to 6% of the mass flow of the exhaust gas stream (1).

13. Device according to anyone of the preceding claims, wherein the exhaust chamber (3) comprises an elongated exhaust chamber conduit (33) having an inlet (331) and an outlet (332).

14. Device according to claim 13, wherein the outlet (332) of the exhaust chamber conduit (33) is connected to the exhaust conduit (2).

15. Device according to anyone of claims 1 to 12, wherein the detection filter (31) of the exhaust chamber (3) is cylindrical and surrounds the temperature sensor (32), and wherein the cylindrical detection filter (31) is arranged such that a longitudinal cylinder axis of the cylindrical detection filter (31) is normal to the longitudinal axis of the exhaust conduit (2).

16. Device according to anyone of the preceding claims, wherein the detection filter (31) comprises a catalytic coating.

17. On-board diagnosis system for the diagnosis of the operability of a particle filter for an exhaust gas stream (1) of an internal combustion engine, comprising
a device according to anyone of the preceding claims, and
an evaluation unit configured to compare the temperature measured by the temperature sensor (32) arranged in the exhaust chamber (3) of the device with a reference temperature.

18. On-board diagnosis system according to claim 17, further comprising a reference temperature sensor arranged in contact with the exhaust gas stream (1) outside of the device for measuring the temperature of the exhaust gas stream (1).

## Patentansprüche

1. Vorrichtung zur Diagnose der Funktionsfähigkeit eines Teilchenfilters für einen Abgasstrom (1) einer Brennkraftmaschine, wobei die Vorrichtung aufweist:
- eine Abgasleitung (2) mit einer Außenwand (21), wobei die Außenwand (21) der Abgasleitung (2) eine virtuelle rohrförmige Begrenzungsumhüllung (22) definiert, wobei die virtuelle rohrförmige Begrenzungsumhüllung (22) die kleinstmögliche rohrförmige Umhüllung mit einem kreisförmigen Querschnitt ist, der koplanar mit dem Querschnitt der Abgasleitung (2) ist und die Außenwand (21) der Abgasleitung (2) an jeder Position entlang der Abgasleitung (2) vollständig umgibt,
- eine Abgaskammer (3) mit einem Detektionsfilter (31),
- einen Temperatursensor (32), der in der Abgaskammer (3) angeordnet ist, wobei der Temperatursensor (32) zum Messen der Temperatur eines Teils (11) des Abgasstroms (1) ausgelegt ist, der mindestens einen Teilbereich des Detektionsfilters (31) durchlaufen hat,
wobei mindestens ein Abschnitt der Abgaskammer (3) thermisch mit der außerhalb der Abgasleitung (2) gelegenen Umgebung verbunden ist, und
wobei die Abgaskammer (3) über die gesamte Länge der Abgaskammer (3) hinweg mindestens teilweise in der virtuellen rohrförmigen Begrenzungsumhüllung (22) angeordnet ist.

2. Vorrichtung nach Anspruch 1, bei der die virtuelle rohrförmige Begrenzungsumhüllung (22) ein virtueller Begrenzungszylinder (22) ist, wobei der virtuelle Begrenzungszylinder (22) der kleinstmögliche Zylinder ist, der einen kreisförmigen Querschnitt und eine normal zum Querschnitt der Abgasleitung (2) verlaufende Zylinderachse hat und die Außenwand (21) der Abgasleitung (2) vollständig umgibt.

3. Vorrichtung nach Anspruch 1 oder 2, bei der die Abgaskammer (3) über die gesamte Länge der Abgaskammer (3) hinweg mindestens teilweise im Inneren der Abgasleitung (2) angeordnet ist.

4. Vorrichtung nach Anspruch 3, bei der die gesamte Abgaskammer (3) im Inneren der Abgasleitung (2) angeordnet ist.

5. Vorrichtung nach einem der Ansprüche 3 oder 4, bei der der Abschnitt der Abgaskammer (3), der thermisch mit der außerhalb der Abgasleitung (2) gelegenen Umgebung verbunden ist, thermisch mit der Außenwand (21) der Abgasleitung (2) verbunden ist.

6. Vorrichtung nach einem der Ansprüche 1 oder 2, bei der die Abgaskammer (3) thermisch von der Abgasleitung (2) getrennt ist.

7. Vorrichtung nach einem der vorhergehenden Ansprüche, mit einem weiteren Referenztemperatursensor (4), der in der Abgasleitung (2) außerhalb der Abgaskammer (3) angeordnet ist, um die Temperatur eines außerhalb der Abgaskammer (3) befindlichen Teils (12) des Abgasstroms (1) zu messen.

8. Vorrichtung nach einem der vorhergehenden Ansprüche, ferner mit einem Kühlkörper (5), wobei der Abschnitt der Abgaskammer (3), der thermisch mit der außerhalb der Abgasleitung (2) gelegenen Umgebung verbunden ist, thermisch mit dem Kühlkörper (5) verbunden ist.

9. Vorrichtung nach Anspruch 8, bei der sich der Kühlkörper (5) in die Abgaskammer (3) erstreckt.

10. Vorrichtung nach einem der Ansprüche 8 oder 9, bei der der Kühlkörper (5) Außenrippen (51) aufweist, die von dem Kühlkörper (5) nach außen hin abstehen.

11. Vorrichtung nach einem der vorhergehenden Ansprüche, wobei die Vorrichtung derart ausgebildet ist, dass der Detektionsfilter (31) der Abgaskammer (3) austauschbar ist.

12. Vorrichtung nach einem der vorhergehenden Ansprüche, bei der der Detektionsfilter (31) eine derartige Querschnittsfläche hat, dass der durch den Detektionsfilter (31) hindurchtretende Teil (11) des Abgasstroms (1) einen Anteil im Bereich von 0,01% bis 10% des Massenflusses des Abgasstroms (1), insbesondere 0,1% bis 6% des Massenflusses des Abgasstroms (1) ausmacht.

13. Vorrichtung nach einem der vorhergehenden Ansprüche, bei der die Abgaskammer (3) eine langgestreckte Abgaskammerleitung (33) mit einem Einlass (331) und einem Auslass (332) aufweist.

14. Vorrichtung nach Anspruch 13, bei der der Auslass (332) der Abgaskammerleitung (33) mit der Abgasleitung (2) verbunden ist.

15. Vorrichtung nach einem der Ansprüche 1 bis 12, bei der der Detektionsfilter (31) der Abgaskammer (3) zylindrisch ist und den Temperatursensor (32) umgibt, und bei der der zylindrische Detektionsfilter (31) derart angeordnet ist, dass eine Längszylinderachse des zylindrischen Detektionsfilters (31) normal zu der Längsachse der Abgasleitung (2) verläuft.

16. Vorrichtung nach einem der vorhergehenden Ansprüche, bei der der Detektionsfilter (31) eine katalytische Beschichtung aufweist.

17. On-Board-Diagnosesystem zur Diagnose der Funktionsfähigkeit eines Teilchenfilters für einen Abgasstrom (1) einer Brennkraftmaschine, mit einer Vorrichtung nach einem der vorhergehenden Ansprüche, und einer Auswertungseinheit, die derart konfiguriert ist, dass sie die Temperatur, die von dem in der Abgaskammer (3) der Vorrichtung angeordneten Temperatursensor (32) gemessen wird, mit einer Referenztemperatur vergleicht.

18. On-Board-Diagnosesystem nach Anspruch 17, ferner mit einem Referenztemperatursensor, der in Kontakt mit dem außerhalb der Vorrichtung befindlichen Abgasstrom (1) angeordnet ist, um die Temperatur des Abgasstroms (1) zu messen.

## Revendications

1. Dispositif permettant de faire le diagnostic du bon fonctionnement d'un filtre à particules destiné au flux des gaz d'échappement (1) d'un moteur à combustion interne, ce dispositif comprenant :
- une conduite d'échappement (2) ayant une paroi externe (21), la paroi externe (21) définissant une enveloppe tubulaire limite virtuelle (22), correspondant à la plus petite enveloppe tubulaire possible ayant une section transversale circulaire coplanaire à la section transversale de la conduite d'échappement (2) et entourant totalement la paroi externe (21) de la conduite d'échappement (2) dans une position quelconque le long de cette conduite d'échappement (2),
- une chambre d'échappement (3) renfermant un filtre de détection (31),
- un capteur de température (32) monté dans la chambre d'échappement (3), ce capteur de température (32) étant réalisé pour permettre de mesurer la température d'une partie (11) du flux de gaz d'échappement (1) ayant passé au travers d'au moins une partie du filtre de détection (31),
au moins une partie de la chambre d'échappement (3) étant reliée thermiquement à l'environnement externe de la conduite d'échappement (2), et
la chambre d'échappement (3) étant au moins partiellement située dans l'enveloppe tubulaire limite virtuelle (22) sur la totalité de sa longueur.

2. Dispositif conforme à la revendication 1,
dans lequel l'enveloppe tubulaire limite virtuelle (22) est un cylindre limite virtuel (22), constituant le plus petit cylindre possible ayant une section transversale circulaire et un axe perpendiculaire à la section transversale de la conduite d'échappement (2) et entourant totalement la paroi externe (21) de cette conduite d'échappement (2).

3. Dispositif conforme à l'une quelconque des revendications 1 et 2, dans lequel la chambre d'échappement (3) est au moins partiellement située à l'intérieur de la conduite d'échappement (2) sur la totalité de sa longueur.

4. Dispositif conforme à la revendication 3,
dans lequel la totalité de la chambre d'échappement (3) est située à l'intérieur de la conduite d'échappement (2).

5. Dispositif conforme à l'une quelconque des revendications 3 et 4, dans lequel la partie de la chambre d'échappement (3) reliée thermiquement à l'environnement externe de la conduite d'échappement (2) est couplée thermiquement à la paroi externe (21) de la conduite d'échappement (2).

6. Dispositif conforme à l'une quelconque des revendications 1 et 2, dans lequel la chambre d'échappement (3) est séparée thermiquement de la conduite d'échappement (2).

7. Dispositif conforme à l'une quelconque des revendications précédentes,
comprenant un capteur de température de référence supplémentaire (4) monté dans la conduite d'échappement (2) à l'extérieur de la chambre d'échappement (3) pour mesurer la température de la partie (12) du flux de gaz d'échappement (1) circulant à l'extérieur de la chambre d'échappement (3).

8. Dispositif conforme à l'une quelconque des revendications précédentes,
comprenant en outre un corps de dissipation de la chaleur (5), la partie de la chambre d'échappement (3) reliée thermiquement à l'environnement externe de la conduite d'échappement (2) étant couplée thermiquement au corps de dissipation de la chaleur (5).

9. Dispositif conforme à la revendication 8,
dans lequel le corps de dissipation de la chaleur (5) s'étend dans la chambre d'échappement (3).

10. Dispositif conforme à l'une quelconque des revendications 8 et 9, dans lequel le corps de dissipation de la chaleur (5) comporte des ailettes externes (51) s'étendant vers l'extérieur à partir de ce corps de dissipation de la chaleur (5).

11. Dispositif conforme à l'une quelconque des revendications précédentes,
réalisé de sorte que le filtre de détection (31) de la chambre d'échappement (3) puisse être remplacé.

12. Dispositif conforme à l'une quelconque des revendications précédentes,
dans lequel le filtre de détection (31) a une surface de section transversale telle que la partie (11) du flux de gaz d'échappement (1) passant au travers de ce filtre (31) soit égal à 0,01% à 10% du débit massique du flux de gaz d'échappement (1), en particulier à 0,1% à 6% du débit massique du flux de gaz d'échappement (1).

13. Dispositif conforme à l'une quelconque des revendications précédentes,
dans lequel la chambre d'échappement (3) comporte une conduite de chambre d'échappement allongée (33) ayant une entrée (331) et une sortie (332).

14. Dispositif conforme à la revendication 13,
dans lequel la sortie (332) de la conduite de la chambre d'échappement (33) est reliée à la conduite d'échappement (2).

15. Dispositif conforme à l'une quelconque des revendications 1 à 12, dans lequel le filtre de détection (31) de la chambre d'échappement (3) est cylindrique et entoure le capteur de température (32), et le filtre de détection cylindrique (31) est monté de sorte que l'axe longitudinal du filtre de détection cylindrique (31) soit perpendiculaire à l'axe longitudinal de la conduite d'échappement (2).

16. Dispositif conforme à l'une quelconque des revendications précédentes,
dans lequel le filtre de détection (31) comporte un revêtement catalytique.

17. Système de diagnostic embarqué destiné à permettre d'effectuer le diagnostic du bon fonctionnement d'un filtre à particules destiné au flux de gaz d'échappement (1) d'un moteur à combustion interne comprenant :
un dispositif conforme à l'une quelconque des revendications précédentes, et
une unité d'évaluation réalisée pour permettre de comparer la température mesurée par le capteur de température (32) monté dans la chambre d'échappement (3) du dispositif avec une température de référence.

18. Système de diagnostic embarqué conforme à la revendication 17, comprenant en outre un capteur de température de référence en contact avec le flux de gaz d'échappement (1) circulant à l'extérieur du dispositif de mesure de la température du flux de gaz d'échappement (1).
